# DEMANDE DE BREVET EUROPEEN

(11) **EP 4 837 446 A1**
(43) Date de publication de la demande: **11.11.2026**
(21) Numéro de dépôt: 25175544.3
(22) Date de dépôt: 09.05.2025
(51) Int. Cl.: A43B 3/12, A43B 3/16, A43B 5/14, B62M 3/08

(54) **SANDALE**

(71) Demandeur: B-NEO CLIPS, 5300 Andenne (BE)
(72) Inventeur: LAVRY, Michaël, 5300 Andenne (BE); LAVRY, François, 1030 Schaerbeek (BE); VERLEYEN, Michaël, 4031 Liège (BE)
(74) Mandataire: Gevers Patents

(57) **Abrégé**

L'invention concerne une sandale (1) pour une utilisation comme surchaussure et comprenant une semelle (2) percée d'orifices (21) configurés pour coopérer avec des moyens de fixation d'une cale pour pédale automatique de vélocipède.

## Description

### Domaine technique

L'invention décrite dans ce document concerne une sandale configurée pour être utilisé comme surchaussure dans le cadre du cyclisme.

### Art antérieur

Dans le domaine du cyclisme sur route et du VTT, il est connu d'utiliser des « cales ». Chaque cale correspond à une pièce, généralement en plastique ou en métal, couplée à une semelle de chaussure de l'utilisateur d'un vélocipède. La cale comprend des moyens de coopération, par exemple par clips et/ou crochets et/ou ressorts, avec une pédale du vélocipède. Une telle pédale est dite automatique et coopère en général avec la cale par verrouillage. Ce système permet d'obtenir de meilleures performances en termes de puissance et de maintien des chaussures (donc des pieds) au niveau des pédales automatiques.

L'utilisateur doit alors prévoir des chaussures spécifiques qui sont dédiées au cyclisme dans ces conditions afin de pouvoir les coupler aux cales. En effet, ce couplage est généralement réalisé par vissage de la cale sur la chaussure via des orifices prévus à cet effets dans la semelle de la chaussure. Des encoches et/ou des clips peuvent aussi être utilisés. Les orifices peuvent être munis d'inserts pour faciliter ce couplage. De plus, les chaussures dédiées sont fermées et rigides pour assurer une bonne transmission de puissance au pédalage.

L'utilisation de chaussures de sport spécifiques n'est cependant pas pratique dans les cas où l'utilisateur doit transporter cette paire de chaussures en plus de sa paire de chaussures « classiques » et il doit en outre changer de chaussures tant avant qu'après son cyclisme. Ceci est contraignant et peu efficace, et ces désavantages peuvent être exacerbés par exemple pour un utilisateur en déplacement qui loue un vélocipède.

Lorsque l'utilisateur est un enfant en croissance, il est également nécessaire de changer de chaussures de sport lors d'un changement de pointure, ce qui est inutilement écologiquement et financièrement désavantageux.

Il existe par conséquent un besoin pour des moyens permettant de pratiquer le cyclisme au moyen de pédales automatiques qui surmontent ces inconvénients.

### Exposé de l'invention

Un objet de la présente invention est de fournir des moyens pour pratiquer le cyclisme au moyen de pédales automatiques de façon à la fois plus pratique, plus efficace et plus écologique.

À cette fin, l'invention propose une sandale pour une utilisation comme une surchaussure comprenant une semelle percée d'orifices configurés pour coopérer avec des moyens de fixation d'une cale pour pédale automatique de vélocipède.

La sandale selon l'invention permet de pratiquer le cyclisme via des pédales automatiques de façon à la fois plus pratique, plus efficace et plus écologique. En effet, elle agit comme une interface entre les chaussures classiques de l'utilisateur et les cales à coupler (ou typiquement fixer) à ces chaussures. Plutôt que de faire ce couplage directement sur la chaussure, il est fait sur la sandale, via les orifices prévus à cet effet sur la semelle configurés pour coopérer adéquatement avec les moyens de fixation de la cale, tandis que la sandale elle-même est utilisée comme surchaussure pour la chaussure classique, par exemple de sport ou de ville, de l'utilisateur.

L'utilisateur peut ainsi pratiquer le cyclisme avec des pédales automatiques sans changer de chaussures. L'utilisation d'une surchaussure notamment une sandale est a *contrario* des chaussures de sport pour cet usage qui sont fermées et rigides car elle rend l'interface peu encombrante, portative et légère, donc plus efficace et pratique à utiliser qu'une paire de chaussures de sport supplémentaire.

Dans le cadre de ce document et tel qu'il est classiquement employé dans la vie courante, le terme « sandale » désigne une (sur)chaussure légère et ouverte, comprenant une semelle préférentiellement plate attachée au pied (ou équivalent) par des lanières et/ou des bandes plus ou moins larges. Une sandale est dès lors en général à bride ouverte et laisse ainsi visible une partie du pied (ou équivalent).

La sandale a donc l'avantage d'une géométrie flexible largement compatible avec toute forme de chaussures lorsqu'elle est employée comme surchaussure. Les lanières et/ou bandes susdites permettent cette géométrie flexible, et donc de aussi de s'adapter à une large gamme de pointures (par exemple, au moins cinq) pour une même forme de chaussure.

Dans le cadre de ce document et tel que connu, le terme « surchaussure » désigne un accessoire destiné à être porté par-dessus une chaussure. Différents types de surchaussures existent selon les besoins, par exemple, des chaussons souples de protection esthétique de chaussures contre la pluie, neige et/ou boue, des enveloppes souples hygiéniques pour limiter la propagation des bactéries et virus dans un milieu hospitalier, ou même des bottes de sécurité métalliques pour chantiers. Dans le cadre de l'invention, les surchaussures jouent le rôle d'interface entre les cales et les chaussures classiques de l'utilisateur et prennent la forme de sandales configurées pour être portées au-dessus de ces chaussures.

En ce sens, l'objet de la présente invention peut aussi être défini comme une surchaussure consistant en une sandale et comprenant une semelle étant percée d'orifices configurés pour coopérer avec des moyens de fixation d'une cale.

Les moyens de fixation dans le cadre de l'invention permettent de réaliser le couplage susmentionné des cales avec les chaussures portées par de l'utilisateur par l'intermédiaire des sandales de l'invention. Il s'agit de moyens pour fixer et/ou maintenir les cales sur les semelles des sandales, de préférence des vis et/ou des moyens de vissage connus comprenant par exemple aussi des écrous et/ou des pièces (femelles) filetées pour le vissage (qui sont par exemple fixés et/ou insérés dans les orifices de la semelle). La cale comprend alors des orifices filetés ainsi que des vis qui traversent ceux-ci après vissage jusqu'au niveau des orifices de la semelle de la sandale pour maintenir la cale sous la semelle.

Il est noté que le terme « fixation » utilisé n'exclut pas un mouvement relatif angulaire limité (en général d'au plus quelques degrés, par exemple moins de 9°) entre la sandale et la cale suivant un plan d'extension de la semelle, notamment lorsqu'il n'est prévu que un ou deux points de vissage.

D'autres moyens de fixation que les vis connus dans la pratique cycliste sont envisageables dans le cadre de l'invention, par exemple, des moyens de fixation à tiges, à clips, à encoches, à crochets, etc. sans s'y limiter. De façon générale, comme le comprend l'homme du métier, tous ces moyens de fixation sont connus et coopèrent avec des cales appropriées et des orifices de la semelle configurés à cette fin, de façon à coupler, à fixer et/ou à maintenir la cale à la sandale. Sans s'y limiter, l'homme du métier sait, par exemple, quelle partie femelle éventuelle des moyens de fixation serait à insérer, à fixer et/ou à coupler aux orifices configurés à cet effet et comment réaliser cette opération pour qu'une partie mâle éventuelle de ces moyens de fixation coopérant avec la partie femelle couple ensuite la cale et la semelle sans qu'il n'y ait besoin de décrire ceci dans les moindre détails.

Dans le cadre de ce document, l'usage du verbe « comprendre », ainsi que de ses variantes et ses conjugaisons, ne peut d'aucune façon exclure la présence d'éléments autres que ceux mentionnés. De même, l'usage d'articles indéfinis tels que « un », « une », ou d'articles définis tels que « le », « la » ou « l' », dans le but d'introduire un élément n'exclut pas la présence d'une pluralité de ces éléments.

Tel qu'il est connu de l'homme du métier, le terme « vélocipède » se réfère à un véhicule à deux roues ou plus, à propulsion humaine. Dans le contexte de ce document, la propulsion humaine se fait via des pédales automatiques et par les membres inférieurs de l'utilisateur. Le vélocipède est de préférence une bicyclette (ou « vélo », avec donc deux roues) sans toutefois s'y limiter. Un vélocipède muni d'un moteur de propulsion d'appoint, par exemple un moteur électrique, n'est bien évidemment pas exclu du cadre de l'invention.

Selon un mode de réalisation préféré de l'invention, la semelle est limitée à moins d'une moitié d'une longueur de la sandale. La semelle ne s'étend donc pas sur toute la surface plantaire du pied ni sur toute la surface inférieure la chaussure de l'utilisateur. Le poids et l'encombrement de la sandale sont ainsi limités, ainsi que la quantité de matière nécessaire à sa fabrication, ce qui contribue également à une sandale plus écologique et économique. Cet effet est notable car la semelle constitue de façon connue généralement la partie la plus rigide d'une sandale. Ce mode de réalisation est rendu possible car l'utilisateur conserve ses chaussures et vu qu'il n'est pas nécessaire de prévoir davantage de semelle que sur une zone pour supporter la chaussure lors de l'application d'une force de pédalage et pour y coupler la cale.

De façon usuelle, la longueur de la sandale peut être mesurée selon un axe orienté de l'arrière vers l'avant de la sandale (ou orienté inversement). L'arrière (resp. l'avant) susdit peut être défini comme une zone de la sandale au niveau de l'arrière (resp. l'avant) du pied de l'utilisateur, revêtant indirectement partiellement cette partie du pied avec la chaussure de l'utilisateur interposée entre le pied et la sandale.

La semelle est de préférence d'un seul tenant pour être suffisamment rigide pour l'application d'un pédalage automatique. De préférence, elle s'étend à partir d'une extrémité avant de la sandale. Faisant écho au paragraphe précédent, cette extrémité avant est ainsi destinée à être placée au niveau de l'extrémité avant (i.e. la pointe) du pied (notamment les orteils). L'extension se fait alors jusqu'à un point sur l'axe susmentionné, ce point étant plus proche de l'avant de la sandale que de l'arrière de la sandale. Avantageusement, la semelle est donc située sur l'avant de la sandale, au niveau de la zone d'appui principale sur la pédale, pour l'application d'une force de pédalage et pour y coupler la cale.

Selon un mode de réalisation préféré de l'invention, la sandale comprend un câble couplé à un moyen de serrage de ce dernier faisant saillie sur une extrémité arrière de la sandale. Ce câble permet avantageusement au moins partiellement de concrétiser la géométrie flexible de la sandale car son serrage contraindra plus ou moins l'espace disponible d'insertion d'une chaussure, s'adaptant ainsi à cette dernière au moins localement au niveau de la portion de la sandale adjacente au câble pour assurer un maintien approprié de la chaussure (et donc du pied) dans la sandale.

Le moyen de serrage fait saillie sur une extrémité arrière de la sandale, d'où un positionnement à l'arrière de la chaussure (et donc du pied) de l'utilisateur, au niveau du talon. Cette disposition n'est pas choisie arbitrairement car elle optimise l'accessibilité manuelle au moyen de serrage par l'utilisateur sur le vélocipède. En effet, une zone voisine de l'arrière du pied (au niveau du talon) est en général plus accessible physiquement que la zone voisine de l'avant du pied (ou coup de pied) lorsque le pied de l'utilisateur (via sa chaussure et la sandale) coopère avec une pédale automatique, cet effet étant d'ailleurs exacerbé lorsque le vélocipède est une bicyclette. Il est ainsi plus aisé pour l'utilisateur de serrer ou desserrer le câble lorsque qu'il est à l'arrêt sur le vélocipède.

De préférence, le moyen de serrage et/ou le câble auquel il est associé sont uniques sur une sandale. Il est ainsi possible d'ajuster la géométrie de la sandale à la chaussure de l'utilisateur manuellement par le seul moyen de serrage, ce qui rend la sandale d'autant plus pratique et efficace. Préférentiellement, le moyen de serrage est une roulette de serrage à cliquet, par exemple, un système de serrage BOA ^{®}. Un tel moyen de serrage est connu de l'homme du métier. Il est simple à intégrer dans une sandale lors de sa fabrication, de même que simple et pratique à utiliser pour l'utilisateur.

Selon un mode de réalisation particulier de l'invention, la sandale comprend un bord latéral formé d'une bande de matière doublée dans laquelle est enfermée une partie du câble. Une telle bande de matière présente l'avantage d'être simple à mettre en œuvre et de doter la sandale, au moins latéralement, d'une géométrie flexible pour s'adapter à une gamme de pointures et de formes de chaussures. À cet effet, une matière élastique constitue typiquement la bande, par exemple, une matière constituée d'au moins 25%, voire d'au moins 50%, de fibres synthétiques élastiques telles que de l'élasthanne.

La doublure de la bande permet d'y enfermer le câble au moins le long d'un parcours commun de ces éléments. Cela permet avantageusement de maintenir le câble en position de serrage approprié de la bande, et d'autre part, de protéger la chaussure contre une usure qui serait due aux frottements du câble pendant le pédalage. De plus, la position du câble enfermé partiellement dans la doublure de la bande de matière induit également que le serrage du câble se fait latéralement à partir de l'arrière vers l'avant de la sandale, garantissant un ajustement précis et homogène du serrage parallèlement à un plan d'extension de la semelle.

Ces effets sont préférentiellement amplifiés par une bande de matière ayant une section en forme de « U » dans ce plan, la base arrondie définissant l'arrière de la sandale duquel le moyen de serrage fait saillie. De préférence, l'extrémité de chaque branche de cette forme surmonte un voisinage immédiat de la semelle.

Suivant un mode de réalisation de l'invention, la sandale comprend un bord supérieur formé d'une lanière ayant deux segments extrémaux d'ancrage dans la semelle et surmontant la semelle entre ceux-ci. La lanière est de préférence faite de la même matière que la bande de matière susdite. La lanière est de préférence réglable en longueur perpendiculairement à la semelle de sorte que la sandale est davantage compatible avec une large gamme de formes de chaussures (donc de tailles de pieds). La lanière, en surmontant la semelle, permet un maintien approprié de la chaussure (donc du pied) perpendiculairement à la semelle lors du pédalage.

De préférence, la sandale comprend deux gouttières coudées chacune fixée sur la lanière contre un des segments extrémaux d'ancrage susdits, le câble étant reçu dans les gouttières et guidé par celles-ci de sorte qu'il surmonte la lanière. Le câble est alors en contact direct avec toute ou une plus grande partie de la lanière et le serrage du câble permet aussi un serrage de la lanière perpendiculairement à la semelle. Il s'agit d'une réalisation préférée du réglage susdit de la lanière fait au moyen du câble et du moyen de serrage de celui-ci.

Les gouttières permettent avantageusement, de par leur forme coudée (par exemple formant un angle droit ou presque), de diriger le câble d'une trajectoire essentiellement parallèle à la semelle vers une trajectoire surmontant la semelle, typiquement dans un plan perpendiculaire à la semelle. Les gouttières permettent donc l'usage d'un seul câble s'étendant contre la bande et la lanière dans deux plans sécants, voire même perpendiculaires, dans le but d'ajuster la sandale à la chaussure selon ces deux plans. L'ajustement est commandé par le seul moyen de serrage, et non par de multiple points de serrage manuel, ce qui rend l'objet de l'invention d'autant plus pratique et plus simple d'usage, tout en garantissant que la chaussure (classique) de l'utilisateur soit maintenue de façon efficace et fiable lors du pédalage malgré les forces de réaction qui s'exercent dans ces plans.

Suivant un mode de réalisation de l'invention, la sandale comprend en outre une sangle de rigidité fixée de préférence intérieurement sur une partie arrière de la bande de matière doublée. La sangle de rigidité, comme son nom l'indique est alors davantage rigide que la bande de matière et permet d'induire davantage de rigidité et de structure à l'arrière de la sandale, notamment au voisinage du moyen de serrage et du talon. Ceci rend la sandale plus pratique et simple d'usage vu qu'il n'est pas nécessaire de la manipuler des deux mains pour surchausser les chaussures de l'utilisateur, ce qui aurait été le cas si toute la sandale à l'arrière de la semelle n'était formé que de la seule bande. La sangle protège aussi le moyen de serrage dans une certaine mesure en évitant qu'il ne soit une partie plus rigide isolée à l'arrière de la sandale. Elle facilite en outre le rangement de la sandale et son ergonomie.

Selon un mode de réalisation de cette invention, les orifices sont oblongues. Ils sont de préférence orientés semblablement, notamment selon l'axe orienté de l'arrière vers l'avant de la sandale. Ainsi, malgré que la position des orifices dans la semelle soit fixe, leur forme procure un degré de liberté limité qui permet une coopération avec tout type (ou au moins une large gamme) de moyens de fixation de cales usuelles, quel que soit le type de cales utilisées et les moyens de fixation qui lui sont associés.

Selon un mode de réalisation de l'invention, les orifices sont (exactement) au nombre de trois. Les orifices sont de agencés, de préférence symétriquement, sur la semelle selon des sommets d'un triangle isocèle. La symétrie s'apprécie alors typiquement par rapport à l'axe susdit. Comme les cales usuelles comprennent en général 1 à 3 points de fixation (par des vis ou d'autres moyens susmentionnées), l'utilisation de trois orifices est suffisant pour être compatible avec toutes les cales ou presque. Quand bien même, dans un cas non connu, davantage de tels points seraient prévus il est toujours possible de coupler la cale à la semelle via 2 ou 3 des orifices.

L'agencement symétrique des orifices aux sommets d'un triangle isocèle est avantageusement compatible avec des cales ayant 1 point de fixation (au niveau du sommet du triangle placé sur l'axe), 2 points de fixation (au niveau des deux autres sommets sur la base du triangle perpendiculaire à l'axe) et/ou bien entendu avec 3 points de fixation généralement disposés de cette façon. Ladite symétrie contribue, quant à elle, à cette compatibilité, ainsi qu'à une répartition équilibrée des efforts sur la semelle.

Selon un mode de réalisation de l'invention, un bord de la semelle forme une boucle fermée. La semelle a de préférence des zones d'ancrage agencées le long de ce bord. Ces zones d'ancrage sont de préférence prévue pour l'ancrage d'une portion de maintien de surchaussage surmontant la semelle. Cette portion a donc pour but de maintenir le surchaussage, c'est-à-dire de maintenir la chaussure (et donc pied) de l'utilisateur dans la sandale, contre la semelle, pendant le pédalage. Le maintien est de préférence réalisée à l'avant de la sandale, notamment avec la semelle s'étendant sur la moitié avant de la sandale (considérée selon l'axe). La fonction de maintien est mise en œuvre par l'ancrage de cette portion le long du bord de la semelle et le fait qu'elle surmonte la semelle.

De préférence, lorsque la sandale comprend la lanière introduite ci-avant, la portion de maintien de surchaussage comprend celle-ci et une enveloppe bombée en forme de fourche portée par deux branches arquées ancrées sur la semelle et croisée par la lanière en un sommet extrémal. L'enveloppe a une forme de « Y ». Elle est de préférence constitué d'un matériau plus rigide que la lanière faite d'une matière élastique comme décrit ci-avant. Le matériau peut être choisi pour ne pas endommager la chaussure de l'utilisateur.

L'enveloppe peut aussi être caractérisée comme une coque (semi-rigide) de surchaussage assurant le maintien de la chaussure lors du pédalage. La forme de l'enveloppe perme de prévoir un espace entre les deux banches arquées pour un ajustement à une large gamme de chaussures et de pointures, typiquement pour l'avant-pied, tout en maintenant la chaussure (et donc le pied) dans la sandale, en ce compris lorsqu'il s'agit de pivoter latéralement celle-ci pour déverrouiller la cale de la pédale.

L'enveloppe croise la lanière au sommet extrémal de la sandale pour former un bord d'entrée de la coque surmontant la semelle dans un plan perpendiculaire à celle-ci. Le croisement renforce le maintien de la chaussure dans la sandale et le côté pratique de celle-ci, sans nuire à son encombrement. Il peut être réalisé de façon connue pour le croisement de lanières et/ou de bandes d'une « sandale » comme définie ci-avant dans le cadre de ce document. Une couture peut être par exemple prévue entre la lanière et l'enveloppe à leur croisement.

Le sommet extrémal, au croisement de l'enveloppe et de la lanière, est muni d'un élément mécanique de maintien (ou gouttière de maintien) du câble introduit ci-avant dans lequel passe celui-ci selon une réalisation préférée de l'invention.

De préférence, la lanière s'étend au-delà du sommet extrémal sous la forme d'une boucle basée en ce dernier. La boucle prolonge ainsi le sommet extrémal. Elle renforce le côté simple et pratique de la sandale car elle permet à l'utilisateur, en tirant sur la boucle, de maintenir la coque ouverte pour y insérer et/ou retirer sa chaussure.

De préférence, les zones d'ancrage sont agencées de façon symétrique sur la semelle selon des sommets d'un trapèze isocèle. Comme ces zones d'ancrage servent pour l'ancrage de la portion de maintien de surchaussage sur la semelle, un tel agencement symétrique permet de répartir de façon adéquate les forces qui sont exercées sur cette portion et son ancrage au niveau de la semelle lors du pédalage. Un agencement trapézoïdale répond aux exigences de répartition selon l'axe susdit et perpendiculairement à celui-ci, et tient compte semelle en général de largueur décroissante (perpendiculairement à l'axe) de l'arrière vers l'avant. Un agencement selon un rectangle est toutefois également possible dans le cadre de l'invention.

De préférence, les segments extrémaux d'ancrage de la lanière sont ancrés au niveau de deux premiers sommets du trapèze isocèle, et les branches arquées sont ancrées au niveau de deux deuxièmes sommets du trapèze isocèle. Comme décrit ci-avant, l'ancrage de la lanière sur la semelle se fait au niveau de ses deux segments extrémaux d'ancrage, chacun au niveau d'un des premiers sommets. Selon une réalisation, les premiers sommets appartiennent à une grande base du trapèze et les deuxièmes sommets appartiennent à une petite base du trapèze, et les grande et petite base sont parallèles. L'enveloppe est par exemple maintenue à l'avant par les deux branches arquées ancrées dans la semelle et à l'arrière par son croisement avec la lanière au sommet extrémal de la sandale.

Lorsque les orifices sont agencés symétriquement selon des sommets d'un triangle isocèle sur la semelle, alors ce triangle est de préférence symétriquement et/ou centralement inscrit dans le trapèze isocèle (ou le rectangle le cas échéant). Cette réalisation est particulièrement avantageuse car elle permet une répartition équilibrées des forces opposées appliquées sur la semelle lors du pédalage d'une part, selon une orientation, dues au maintien du surchaussage via l'ancrage de la portion dédiée, et d'autre part, selon une orientation opposée, dues au couplage de la cale via la coopération des moyens de fixation avec les orifices.

Selon un mode de réalisation préféré de l'invention, la sandale convient pour la chaussure droite ou gauche de l'utilisateur, sans différence structurelle. Ceci est en particularité concrétisé par les agacements symétriques susmentionné.

L'adaptabilité de la sandale à une large gamme de chaussures et pointures par les caractéristiques décrites précédemment (par exemple, une semelle limitée ainsi qu'une bande de matière et une lanière élastiques) induit notamment aussi une adaptabilité à la chaussure droite ou gauche indistinctement.

Avantageusement, cela rend facile et pratique l'utilisation de la sandale pour l'utilisateur car il ne doit pas distinguer à quelle chaussure surchausser la sandale, et il peut plus facilement emboîter et/ou plier les sandales l'une dans l'autre pour les ranger dans un espace compacte, estimé à quatre fois plus petit que pour une chaussure classique. Ce mode de réalisation présente également des avantages évidents en termes de production et de logistique.

La présente invention propose aussi un vélocipède comprenant des pédales automatiques dont chacune est couplée mécaniquement à une cale qui est elle-même couplée mécaniquement à une semelle d'une sandale selon l'invention via des moyens de fixation de la cale coopérant avec les orifices de la semelle.

L'ensemble des modes de réalisation et des avantages de la sandale selon l'invention se transposent *mutatis mutandis* au présent vélocipède. Ce dernier est avantageux en ce qu'il est directement prêt au cyclisme pour l'utilisateur avec ses chaussures classiques sans autre manipulation que d'enfiler les sandales et/ou de les ajuster à ses chaussures. Comme les sandales offrent une géométrie flexible ajustable et compatible avec une large gamme de pointures, le vélocipède est en outre utilisable directement par un grand nombre de personnes sans être limité à un utilisateur spécifique.

L'invention propose enfin une méthode de cyclisme par un vélocipède muni de pédales automatiques comprenant l'utilisation d'une paire de sandales selon la présente invention. Plus précisément, la méthode de cyclisme comprend :
- la fourniture d'une paire de cales et d'une paire de sandales selon l'invention,
- le couplage mécanique d'une cale à la semelle de chaque sandale via des moyens de fixation de la cale coopérant avec les orifices de la semelle, et
- le couplage mécanique de chaque cale à une des pédales automatiques, ces étapes étant exécutées dans cet ordre.

Cette dernière étape s'apparente à un verrouillage des cales sur les pédales et peut être réalisée par des moyens bien connus de l'homme du métier propres aux cales. Elle peut être précédée d'une étape de surchaussage des sandales par l'utilisateur (avant ou après le couplage mécanique des cales aux semelles).

L'ensemble des modes de réalisation et des avantages de la sandale selon l'invention se transposent *mutatis mutandis* à la présente méthode de cyclisme.

### Brève description des figures

D'autres caractéristiques et avantages de la présente invention apparaîtront à la lecture de la description détaillée qui suit pour la compréhension de laquelle on se reportera aux figures annexées parmi lesquelles :
- la figure 1 représente une vue tridimensionnelle d'une sandale selon un mode de réalisation de la présente invention ;
- la figure 2 représente une vue à partir du dessous, i.e. avec la semelle en avant plan, par transparence de la sandale de la figure 1.

Les dessins des figures ne sont que schématiques et ne sont pas à l'échelle. Des éléments identiques ou semblables sont en général notés par des références identiques ou semblables dans les figures. La présence de numéros ou lettres de référence aux dessins ne peut en aucun cas être considérée comme limitative, y compris lorsque ces numéros ou lettres sont indiqués dans les revendications.

### Description détaillée d'une réalisation de l'invention

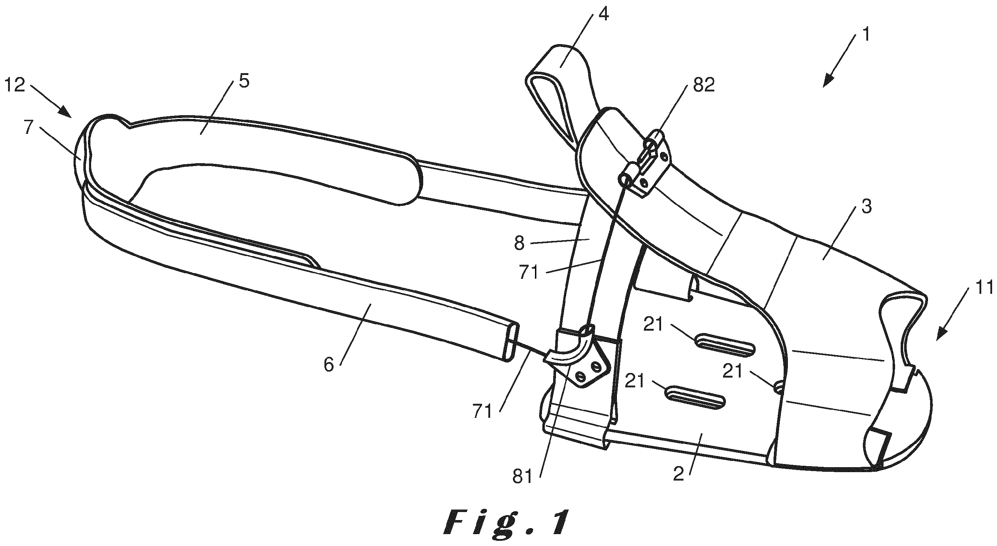

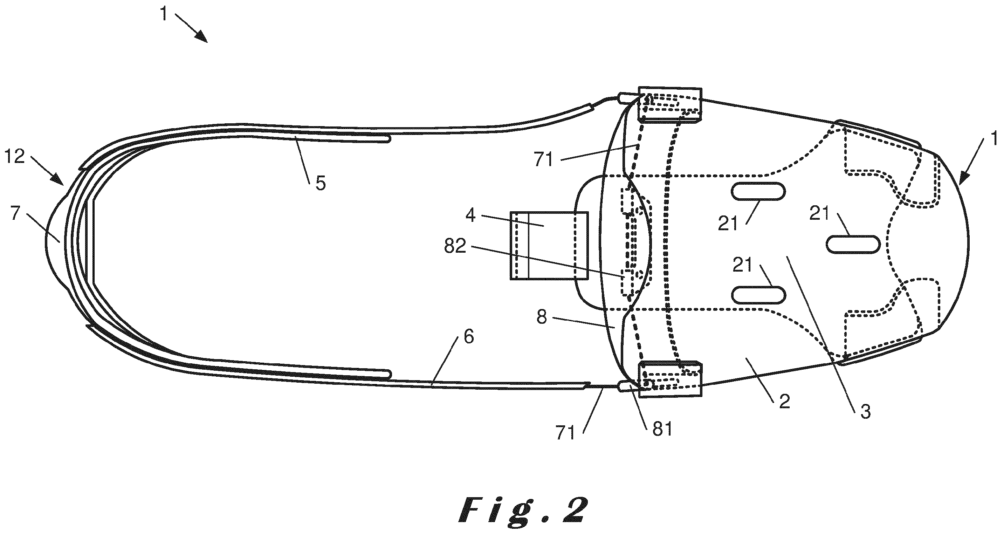

Il est présenté ci-après une description détaillée d'une réalisation spécifique, particulière et préférée de l'invention. La portée de cette invention n'y est toutefois pas limitée. Les figures 1 et 2 susdites auxquels il est en outre fait référence dans cette description ne limitent pas non plus la portée de l'invention à leurs dessins.

Les figures 1 et 2 illustrent deux vues d'une sandale 1 configurée pour être utilisée comme surchaussure selon une telle réalisation de l'invention. La sandale 1 comprend une extrémité avant 11 et une extrémité arrière 12. Dans le cadre de ce document, comme le comprendrait l'homme du métier, les termes « avant » et « arrière » sont utilisés en référence à ces repères. La sandale 1 s'étend selon un axe longitudinal de l'arrière vers l'avant de la sandale (ou inversement) dit « axe » dans le cadre de ce document et correspondant à la « longueur » de la sandale.

La sandale 1 comprend une semelle 2 percée d'orifices 21 coopérant avec des moyens de fixation d'une cale (non représentés) pour pédale automatique de vélocipède. La semelle 2 s'étend selon un plan horizontal qui est parallèle à l'axe. Le terme « surmonter » est utilisé dans ce document pour désigner un élément de la sandale 1 au-dessus d'un autre selon un axe perpendiculaire au plan horizontal susdit et dirigé à partir de la semelle 2.

Comme pour toute sandale, la semelle 2 susdite est attachée à la chaussure à surchausser par des « bandes et/ou lanières » au sens génériques du terme et désignées par les référence 3, 5, 6 et 8. Plus précisément, la sandale 1 comprend une portion de maintien de surchaussage ayant une lanière 8 et une enveloppe 3. La lanière 8 forme un bord supérieur surmontant la semelle 2 comme un pont au-dessus de l'extrémité ou la partie arrière de la semelle 2 et s'étendant entre deux segments extrémaux d'ancrage dans la semelle 2 visibles sur la figure 1 comme boucles doublées passant par des fentes dans la semelles 2. La lanière 8 est faite d'une matière élastique.

L'enveloppe 3 se présente sous la forme d'une coque flexible, davantage rigide que la lanière 8. Elle est bombée et a une de fourche (en « Y ») portée par deux branches arquées ancrées sur la semelle 2, un espace étant ainsi avantageusement prévu pour l'avant de la chaussure entre les deux branches. L'ancrage des branches est du même type que pour la lanière 8 et se fait via des fentes dans la semelle 2. Le bombage de l'enveloppe 3 se fait de sorte que l'enveloppe 3 surmonte la semelle 2 pour réaliser la fonction de surchaussage.

L'enveloppe 3 est en outre croisée par la lanière 8 en un sommet extrémal surmontant l'arrière de la semelle 2, renforçant ainsi la fiabilité de la sandale 1 en termes de maintien de surchaussage sans compromettre le caractère portatif, peu encombrant et léger de la sandale 1. Une languette 4 peut être prévue comme un prolongement du sommet extrémal, au niveau de la partie « coup de pied » de la chaussure, afin de maintenir la portion de maintien de surchaussage ouverte lors de l'insertion ou du retrait de la chaussure. La languette 4 peut simplement être formée par la lanière 8 à partir du croisement susdit, sous la forme d'une boucle.

La partie de la sandale 1 formée de la semelle 2 et de la portion de maintien de surchaussage (3, 8) s'étend selon moins d'une moitié de longueur de sandale 1 mesurée selon l'axe, en l'occurrence sur la moitié avant de la sandale 1.

Une bande de matière 6 doublée forme bord latéral et arrière de la sandale 1, celui-ci ayant une forme de « U » dont les branches extrémales sont au niveau de la semelle 2, et/ou plus précisément son extrémité arrière ou de son voisinage immédiat. Une sangle de rigidité 5 d'un même matériau que l'enveloppe 3 et, par exemple aussi d'une forme en « U », peut être fixée intérieurement sur une partie arrière de la bande de matière 6, sans nécessairement recouvrir toute la bande de matière 6 comme illustré en figure 1 tant que celle-ci est recouverte au voisinage de l'extrémité arrière 12 de la sandale. Le terme intérieurement se réfère dans le cas présent à l'intérieur de la sandale 1 où la chaussure est se positionne.

Afin d'assurer une bonne adaptabilité de la sandale 1 à la chaussure, il peut être prévu un câble 71 couplé à une roulette de serrage 7 à cliquet - par exemple du type BOA ^{®} sans s'y limiter - faisant saillie sur l'extrémité arrière 12. Le câble 71 s'étend selon la bande de matière 6 dans un plan parallèle à la semelle 2 et est enfermé dans la doublure de la bande de matière 6 dans le but de le protéger des détériorations externes comme les chocs, les intempéries, l'usure, ... mais aussi pour protéger la chaussure d'une usure par frottement contre le câble 71.

Le câble 71 est alors redirigé du plan susdit dans un plan sécant voire même perpendiculaire à celui-ci par deux gouttières 81 coudées fixées sur les segments extrémaux d'ancrage de la lanière 8. Ces gouttières reçoivent et guident le câble 71 le long de la lanière 8, de sorte que le câble 71 surmonte celle-ci. Un élément mécanique 82 de maintien du câble 71 peut être prévu au sommet extrémal de la sandale 1, sous la forme d'une gouttière rectiligne accueillant le câble 71 afin qu'il suive la même trajectoire que la lanière 8 en toute circonstance. Ainsi, le câble 71 s'étend selon deux plans sécants et plus précisément selon deux formes de « U » dont les branches extrémales sont reliées, chaque forme de « U » étant dans un plan distinct, de telle sorte que le seul (des)serrage du câble 71 par la roulette de serrage 7 induit un ajustement simple et efficace de la sandale 1 à la chaussure selon deux directions perpendiculaires (horizontale selon l'axe, et verticale).

La figure 2 permet de représenter le positionnement des orifices 21 dans la semelle 2 et celui des fentes susdites, celles-ci réalisant les zones d'ancrage de la portion de maintien de surchaussage dans la semelle 2. Trois orifices 21 et quatre fentes sont prévus, deux fentes pour l'ancrage de la lanière 8 et deux fentes pour l'ancrage des branches arquées de l'enveloppe 3. Les orifices 21 sont agencés de façon symétrique selon les trois sommets d'un triangle isocèle. Et les fentes sont agencées symétriquement selon les quatre sommets d'un trapèze isocèle dans lequel est inscrit centralement le triangle isocèle. Le trapèze isocèle et le triangle isocèle sont typiquement symétriques par rapport à l'axe.

Il apparaîtra de façon évidente à l'homme du métier que l'invention n'est pas limitée aux réalisations et aux exemples illustrés et/ou décrits ci-dessus, mais que sa portée est plus largement définie par les revendications ci-après introduites.

## Revendications

1. Sandale (1) pour une utilisation comme surchaussure et comprenant une semelle (2) percée d'orifices (21) configurés pour coopérer avec des moyens de fixation d'une cale pour pédale automatique de vélocipède.

2. Sandale (1) selon la revendication 1, dans laquelle la semelle (2) est limitée à moins d'une moitié d'une longueur de la sandale (1).

3. Sandale (1) selon la revendication 2, dans laquelle la semelle (2) est d'un seul tenant et s'étend à partir d'une extrémité avant (11) de la sandale (1).

4. Sandale (1) selon l'une quelconque des revendications 1 à 3, comprenant un câble (71) couplé à un moyen de serrage (7) de ce dernier faisant saillie sur une extrémité arrière (12) de la sandale (1).

5. Sandale (1) selon la revendication 4, comprenant un bord latéral formé d'une bande de matière (6) doublée dans laquelle est enfermée une partie du câble (71).

6. Sandale (1) selon la revendication 4 ou 5, comprenant un bord supérieur formé d'une lanière (8) comprenant deux segments extrémaux d'ancrage dans la semelle (2) et surmontant la semelle (2) entre ceux-ci, et deux gouttières (81) coudées chacune fixée sur la lanière contre un des segments extrémaux d'ancrage, le câble (71) étant reçu dans les gouttières (81) et guidé par celles-ci de sorte qu'il surmonte la lanière (8).

7. Sandale (1) selon la revendication 5 ou la revendication 6 lorsqu'elle dépend de la revendication 5, comprenant une sangle de rigidité (5) fixée intérieurement sur une partie arrière de la bande de matière (6) doublée.

8. Sandale (1) selon l'une quelconque des revendications 1 à 7, dans laquelle les orifices (21) sont au nombre de trois et sont agencés symétriquement sur la semelle (2) selon des sommets d'un triangle isocèle.

9. Sandale (1) selon l'une quelconque des revendications 1 à 8, dans laquelle les orifices (21) sont de forme oblongue et orientés semblablement.

10. Sandale (1) selon l'une quelconque des revendications 1 à 9, dans laquelle la semelle (2) comprend un bord formant une boucle fermée et le long duquel sont agencées des zones d'ancrage pour une portion de maintien de surchaussage (3, 8) surmontant la semelle (2).

11. Sandale selon la revendication 10 lorsqu'elle dépend de la revendication 6, dans laquelle la portion de maintien de surchaussage comprend la lanière (8) et une enveloppe (3) bombée en forme de fourche portée par deux branches arquées ancrées sur la semelle (2) et croisée par la lanière en un sommet extrémal.

12. Sandale selon la revendication 10 ou 11, dans laquelle les zones d'ancrage sont agencées symétriquement sur la semelle (2) selon des sommets d'un trapèze isocèle, de sorte que, si la sandale (1) est selon la revendication 11, les segments extrémaux d'ancrage de la lanière (8) sont ancrés au niveau de deux des sommets du trapèze isocèle, et les deux branches arquées sont ancrées au niveau de deux autres des sommets du trapèze isocèle.

13. Sandale (1) selon la revendication 12 lorsqu'elle dépend de la revendication 8, dans laquelle le triangle isocèle est symétriquement et/ou centralement inscrit dans le trapèze isocèle.

14. Surchaussure consistant en une sandale (1) selon l'une quelconque des revendications 1 à 13.

15. Vélocipède comprenant des pédales automatiques dont chacune est couplée mécaniquement à une cale elle-même couplée mécaniquement à une semelle (2) d'une sandale (1) selon l'une des revendications 1 à 13 via des moyens de fixation de la cale coopérant avec les orifices (21) de la semelle.

## Revendications modifiées

### Revendications modifiées conformément à la règle 137(2) CBE.

1. Sandale (1) pour une utilisation comme surchaussure et comprenant :
• une semelle (2) percée d'orifices (21) configurés pour coopérer avec des moyens de fixation d'une cale pour pédale automatique de vélocipède, et
• un câble (71) couplé à un moyen de serrage (7) de ce dernier,
**caractérisée en ce que** le moyen de serrage (7) fait saillie sur une extrémité arrière (12) de la sandale (1).

2. Sandale (1) selon la revendication 1, dans laquelle la semelle (2) est limitée à moins d'une moitié d'une longueur de la sandale (1).

3. Sandale (1) selon la revendication 2, dans laquelle la semelle (2) est d'un seul tenant et s'étend à partir d'une extrémité avant (11) de la sandale (1).

4. Sandale (1) selon l'une quelconque des revendications 1 à 3, dans laquelle le moyen de serrage (7) est le seul moyen de serrage de la sandale (1).

5. Sandale (1) selon l'une quelconque des revendications 1 à 4, comprenant un bord latéral formé d'une bande de matière (6) doublée dans laquelle est enfermée une partie du câble (71).

6. Sandale (1) selon l'une quelconque des revendications 1 à 5, comprenant un bord supérieur formé d'une lanière (8) comprenant deux segments extrémaux d'ancrage dans la semelle (2) et surmontant la semelle (2) entre ceux-ci, et deux gouttières (81) coudées chacune fixée sur la lanière contre un des segments extrémaux d'ancrage, le câble (71) étant reçu dans les gouttières (81) et guidé par celles-ci de sorte qu'il surmonte la lanière (8).

7. Sandale (1) selon la revendication 5 ou la revendication 6 lorsqu'elle dépend de la revendication 5, comprenant une sangle de rigidité (5) fixée intérieurement sur une partie arrière de la bande de matière (6) doublée.

8. Sandale (1) selon l'une quelconque des revendications 1 à 7, dans laquelle les orifices (21) sont au nombre de trois et sont agencés symétriquement sur la semelle (2) selon des sommets d'un triangle isocèle.

9. Sandale (1) selon l'une quelconque des revendications 1 à 8, dans laquelle les orifices (21) sont de forme oblongue et orientés semblablement.

10. Sandale (1) selon l'une quelconque des revendications 1 à 9, dans laquelle la semelle (2) comprend un bord formant une boucle fermée et le long duquel sont agencées des zones d'ancrage pour une portion de maintien de surchaussage (3, 8) surmontant la semelle (2).

11. Sandale selon la revendication 10 lorsqu'elle dépend de la revendication 6, dans laquelle la portion de maintien de surchaussage comprend la lanière (8) et une enveloppe (3) bombée en forme de fourche portée par deux branches arquées ancrées sur la semelle (2) et croisée par la lanière en un sommet extrémal.

12. Sandale selon la revendication 10 ou 11, dans laquelle les zones d'ancrage sont agencées symétriquement sur la semelle (2) selon des sommets d'un trapèze isocèle, de sorte que, si la sandale (1) est selon la revendication 11, les segments extrémaux d'ancrage de la lanière (8) sont ancrés au niveau de deux des sommets du trapèze isocèle, et les deux branches arquées sont ancrées au niveau de deux autres des sommets du trapèze isocèle.

13. Sandale (1) selon la revendication 12 lorsqu'elle dépend de la revendication 8, dans laquelle le triangle isocèle est symétriquement et/ou centralement inscrit dans le trapèze isocèle.

14. Surchaussure consistant en une sandale (1) selon l'une quelconque des revendications 1 à 13.

15. Vélocipède comprenant des pédales automatiques dont chacune est couplée mécaniquement à une cale elle-même couplée mécaniquement à une semelle (2) d'une sandale (1) selon l'une des revendications 1 à 13 via des moyens de fixation de la cale coopérant avec les orifices (21) de la semelle.
